# EUROPÄISCHE PATENTSCHRIFT

(11) **EP 3 811 648 B1**
(45) Veröffentlichungstag und Bekanntmachung des Hinweises auf die Patenterteilung: **18.01.2023**
(21) Anmeldenummer: 19733396.6
(22) Anmeldetag: 17.06.2019
(51) Int. Cl.: H04W 12/68, H04L 9/40, H04L 67/12, H04W 12/06, H04W 12/08, G06F 21/32, G06F 21/35, G07C 9/00

(54) **DIEBSTAHLSCHUTZ EINES AUTOMOBILS MITTELS KONTEXTMODELLIERUNG EINES BERECHTIGTEN BENUTZERS**
THEFT PREVENTION OF AN AUTOMOBILE THROUGH THE CONTEXTUAL MODELING OF AN AUTHORIZED USER
PRÉVENTION DU VOL D'UNE AUTOMOBILE PAR LA MODÉLISATION CONTEXTUELLE D'UN UTILISATEUR AUTORISÉ

(30) Priorität: 22.06.2018 DE 102018004997
(43) Veröffentlichungstag der Anmeldung: 28.04.2021
(73) Patentinhaber: Giesecke+Devrient Mobile Security GmbH, 81677 München (DE)
(72) Erfinder: MARTINI, Ullrich, 81667 München (DE)
(74) Vertreter: Giesecke + Devrient IP
(86) Internationale Anmeldenummer: PCT/EP2019/000190
(87) Internationale Veröffentlichungsnummer: WO 2019/242880

(56) Entgegenhaltungen:
- US-A1- 2013 254 857
- US-A1- 2014 340 193
- US-A1- 2014 375 423

## Beschreibung

Die vorliegende Erfindung ist auf ein Verfahren zum Verhindern eines Relais-Angriffs zwischen einem Mobiltelefon und einer Startvorrichtung eines Automobils gerichtet, welches es erlaubt, ein Entwenden eines Fahrzeugs zu verhindern. Erfindungsgemäß werden ganz spezifische Bewegungsprofile eines berechtigen Fahrers bzw. Benutzers erkannt und hierdurch verhindert, dass in diversen Anwendungsszenarien ein unberechtigter Benutzer das Fahrzeug startet und sodann entwendet. Hierbei wird u. a. auf die verwendete Sensorik der zugrundeliegenden Hardwarekomponenten abgestellt. Ferner betrifft die Erfindung eine analog eingerichtete Systemanordnung sowie ein Computerprogrammprodukt mit Steuerbefehlen, welche das Verfahren implementieren bzw. die Systemanordnung betreiben.

DE 10 2015 223342 A1 zeigt ein Verfahren zum Betreiben einer Autorisierungsvorrichtung für ein Fahrzeug, wobei der aktuelle Standort der Autorisierungsvorrichtung ermittelt wird. Gemäß dieser Druckschrift wird der aktuelle Standort der Autorisierungsvorrichtung nach einem vorgegebenen Zeitintervall erneut ermittelt.

DE 10 2016 104771 A1 zeigt ein Verfahren zum Erzeugen einer Authentifizierungsnachricht unter Verwendung eines kryptographischen Verfahrens. Diese Druckschrift offenbart die sogenannte kryptographische Ortung, welche der örtlich begrenzten Authentifizierung einer Person oder eines Objektes dient. Dies erfolgt mittels eines mobilen Funksendeempfängers, der auf eine Funkanfrage reagiert.

DE 20 2016102327 U1 zeigt ein Gerät zur Verhinderung eines Missbrauchs eines Funkschlüssels, insbesondere durch Reichweitenverlängerung. Insbesondere wird in dieser Druckschrift angeführt, dass Autodiebe ein System zur Reichweitenverlängerung missbrauchen können, was einem sogenannten Relais-Angriff entspricht.

US 2014/375423 A1 beschreibt eine tragbare Authentisierungsvorrichtung und ein Sicherheitssystem für ein Kraftfahrzeug.

US 2013/254857 A1 beschreibt ein Verfahren, um einen Zugriff auf Nutzerkonten durch den Diebstahl von Logindaten zu verhindern.

Unter anderem in der Automobilbranche ist es bekannt, ein kontaktloses Schlüsselsystem zu implementieren, welches die geographische Position eines Autoschlüssels erkennt und sodann nach einem Herantreten des Fahrers mitsamt seines Schlüssels an das Automobil die Zentralverriegelung entriegelt. Bekannte Verfahren schützen eine solche Kommunikation zwischen dem kontaktlosen Schlüssel und der Sperrvorrichtung dadurch, dass die Verbindung entweder verschlüsselt wird und/oder kryptographische Autorisierungsmechanismen vorgesehen werden, welche sicherstellen, dass es sich bei dem vorgehaltenen Schlüssel tatsächlich um den echten Schlüssel des berechtigten Autofahrers handelt.

Im Bereich der intelligenten Kreditkarten bzw. der sogenannten Smartcards ist das Problem bekannt, dass verwendete RFID-Chips kontaktlos ausgelesen werden können und somit vertrauliche Daten ohne Wissen und Wollen des Karteninhabers ausgelesen werden können. Ferner ist in einem solchen Anwendungsgebiet eine Authentisierung von Diensten möglich, ohne dass hierbei der berechtigte Karteninhaber sein Einverständnis gibt. In diesem Bereich ist es u. a. bekannt, in einem Geldbeutel entsprechende Materialien zu verbauen, welche die Kreditkarte abschirmen. Somit wird hierbei auf die Datenkommunikation als solche abgestellt, welche unterbunden wird.

Generell wird im Stand der Technik das Problem diskutiert, dass sogenannte Man-in-the-middle-Attacken oder auch sogenannte Relais-Angriffe einige Sicherheitsmechanismen umgehen können. Bei einem Man-in-the-middle-Angriff handelt es sich um einen Angriff eines unberechtigten Dritten, weleher Datenkommunikation zur Authentisierung zwischen zwei Entitäten abfängt, aufnimmt und sodann unberechtigterweise erneut vorhält. Somit wird tatsächlich ein Autorisierungsprozess vorgespielt, welcher zu einer Gewährung von Diensten führt, wobei dieser Prozess jedoch nicht von den tatsächlich berechtigten Entitäten durchlaufen wird.

Bei dem Relais-Angriff handelt es sich ebenfalls um einen nicht berechtigten Autorisierungsprozess, wobei die Kommunikation zwischen den beiden Entitäten nicht von diesem selbst angestoßen wird, sondern vielmehr stößt ein Angreifer eine solche Kommunikation an und leitet lediglich Nachrichten von einer anfragenden Entität an eine dienstanbietende Entität weiter. Gemäß diesem Angriffsszenario ist es nicht notwendig, dass der Angreifer die Kommunikation an sich ausliest bzw. abfälscht. Angewendet auf das Szenario des Diebstahlschutzes eines Automobils bedeutet dies, dass ein unberechtigter Dritter ein Gerät zur Reichweitenverlängerung eines kontaktlosen Schlüssels in den Kommunikationsprozess zwischen Schlüssel und Automobil einbringen kann. Auf diese Weise wird dem Automobil vorgetäuscht, der kontaktlose Schlüssel des berechtigten Autofahrers sei in der Nähe und es könne somit berechtigterweise die Zentralverriegelung gelöst werden.

Ein wesentlicher Nachteil bekannter Verfahren und Vorrichtungen ist es, dass Sicherheitsmechanismen speziell auf sogenannte Smartcards abstellen, welche jedoch nicht über eine umfassende Sensorik verfügen. Somit sind die technischen Möglichkeiten einer solchen Smartcard stark eingeschränkt und es können keine komplexen Verfahren implementiert werden, welche auf eine leistungsfähige Hardware zurückgreifen. Generell könnten auch Smartcards mit einer solchen Hardware nachgerüstet werden, wovon der Fachmann aufgrund des technischen Aufwands jedoch abgehalten wird. Smartcards verfügen typischerweise lediglich über eine Induktionsspule, welche die Stromversorgung bewerkstelligt. Wird beispielsweise eine Smartcard an ein Lesegerät vorgehalten, so wird hieraufhin ein Strom induziert, welcher die weiteren elektronischen Komponenten der Smartcard kurzzeitig mit geringen Strommengen versorgt. Während auch Smartcards mit eigenständiger Stromversorgung bekannt sind, sind diese technisch aufwändig herzustellen.

Auch werden im Stand der Technik spezialisierte Token diskutiert, welche über einen mechanischen Freischaltungsmechanismus beispielsweise in Form eines Knopfes verfügen. Diese Mechanismen können beispielsweise in den Fahrzeugschlüssel integriert werden, verlangen jedoch vom Benutzer eine aktive Eingabe und sind zudem einem mechanischen Verschleiß unterworfen. Somit reduzieren solche Mechanismen die Benutzerakzeptanz, und ein automatisches Entriegeln eines Fahrzeugs wird unterbunden.

Somit ist es eine Aufgabe der vorliegenden Erfindung, einen Diebstahlschutz vorzuschlagen, welcher mit geringem technischen Aufwand implementiert werden kann und dennoch ein komfortables und automatisches Entsperren eines Automobils ermöglicht. Folglich besteht die vorliegende Aufgabe ferner darin, lediglich typischerweise vorhandene Hardwarekomponenten wiederzuverwenden und dennoch ein sicheres Verfahren gerade zum Verhindern eines Relais-Angriffs bereitzustellen. Ferner ist es eine Aufgabe der vorliegenden Erfindung, eine entsprechend eingerichtete Systemanordnung vorzuschlagen sowie ein Computerprogrammprodukt mit Steuerbefehlen, die das vorgeschlagene Verfahren ausführen bzw. die Systemanordnung betreiben.

Die Aufgabe wird gelöst mit den Merkmalen der unabhängigen Patentansprüche. Weitere vorteilhafte Ausgestaltungen sind in den Unteransprüchen angegeben.

Demgemäß wird ein Verfahren zum Verhindern eines Relais-Angriffs zwischen einem Mobiltelefon und einer Startvorrichtung eines Automobils vorgeschlagen, aufweisend ein Erfassen eines Referenzbewegungsprofils unter Verwendung des Mobiltelefons, bei dem sich ein berechtigter Fahrer dem Automobil nähert, eine Fahrerposition einnimmt und die Startvorrichtung betätigt, ein Bestimmen eines aktuellen Bewegungsprofils, welches zum Vergleich mit dem erfassten Referenzbewegungsprofil geeignet ist, ein Vergleichen des erfassten Referenzbewegungsprofils mit dem bestimmten aktuellen Bewegungsprofil und ein Abfragen einer Bestätigung mittels des Mobiltelefons, falls die Startvorrichtung betätigt wird und das Vergleichen keine Übereinstimmung zwischen dem erfassten Referenzbewegungsprofil und dem bestimmten aktuellen Bewegungsprofil ergibt. Insbesondere kann ein Mobiltelefon aufgrund seiner eingebauten Sensoren erkennen, ob es sich bewegt oder nicht, und ob es beschleunigt wird oder nicht. Des Weiteren kann sowohl das Auto als auch das Mobiltelefon die Feldstärke der Gegenseite messen und dadurch ein Maß für die Entfernung erhalten.

Der Fachmann erkennt hierbei, dass einzelne Verfahrensschritte weitere Unterschritte aufweisen können und/oder iterativ ausgeführt werden können. Beispielsweise kann das Erfassen eines Referenzbewegungsprofils derart iterativ ausgeführt werden, dass ein initiales Referenzbewegungsprofil erstellt wird, welches in mehreren Iterationen angepasst bzw. verfeinert wird.

Der vorliegenden Erfindung liegt die Erkenntnis zugrunde, dass es bezüglich einem kontaktlosen Startvorgang eines Automobils im Wesentlichen drei Szenarien gibt, auf die im Folgenden Bezug genommen wird:
1. Der berechtigte Benutzer bewegt sich mitsamt seinem Schlüssel zu dem Automobil. Daraufhin erkennt das elektronische Endgerät bzw. der Schlüssel typische Bewegungsvorgänge, welche mit dem Herantreten an das Automobil verbunden sind und das Automobil gelangt somit in die Reichweite des kontaktlosen Schlüssels, woraufhin die Kommunikation zwischen dem Schlüssel und dem Automobil startet. Sodann steigt der Benutzer in das Auto, setzt sich auf den Fahrersitz und lässt das Auto an. Insbesondere muss das Bewegungsprofil und die Änderung der gemessenen Feldstärken konsistent sein.
2. Bei einer sogenannten Relais-Attacke sitzt der Fahrer beispielsweise in einem Restaurant, Theater, Kino oder dergleichen. Hierbei bewegt sich der Benutzer typischerweise nicht und das Smartphone bzw. der kontaktlose Schlüssel erkennt somit auch keine Bewegung. Nichtsdestotrotz scheint es gemäß diesem Relais-Angriff so zu sein, dass der Schlüssel sich dem Fahrzeug nähert. Insbesondere sind in diesem Feldstärke-Änderungen und Bewegung bzw. Beschleunigung nicht konsistent. Das sollte ein gewisses Misstrauen bzw. Sicherheitsmechanismen auslösen. Hierbei ist eine mögliche Reaktion, dass der Benutzer aufgefordert wird, einen entsprechenden Entsperrvorgang manuell zu autorisieren, beispielsweise mittels seines Mobiltelefons oder eines Drückens eines Knopfes.
3. Relais-Attacke, während sich der berechtigte Fahrer bewegt. Bei einer solchen Attacke folgt ein unberechtigter Dritter dem Fahrer, welcher den kontaktlosen Schlüssel trägt. Jedoch gelingt dem Angreifer hier die Täuschung nur, wenn er den berechtigten Fahrer anhält (der berechtigte Fahrer würde ja an dem Auto stehenbleiben). In diesem Angriffsszenario ist es gemäß Stand der Technik nicht leicht möglich, einen Angriff mit geringem technischen Aufwand zu verhindern, da sich tatsächlich der Fahrer mitsamt seinem kontaktlosen Schlüssel dem Fahrzeug nähert und das Bewegungsprofil plausibel erscheint.. Erfindungsgemäß wird jedoch hierbei erkannt, dass der Fahrer ganz typische Verhaltensregeln befolgt, welche in besonders vorteilhafter Weise bei der Autorisierung Verwendung finden können. Jedoch erfordert dieser Angriff eine Interaktion zwischen dem berechtigten Fahrer und dem Dieb oder einem Gehilfen des Diebes und daher ist dieser Angriff nicht attraktiv. Ferner müsste zum Starten des Autos noch die Bewegung des Einsteigens und Hinsetzens vom Mobiltelefon erkannt werden, was unwahrscheinlich ist.

Diese drei Anwendungsszenarien werden von der vorliegenden Erfindung in vorteilhafter Weise abgedeckt, wobei das Szenario 1 unkritisch ist, da es sich hierbei um den berechtigten Benutzer handelt. Die Szenarien 2 und 3 werden erfindungsgemäß in besonders vorteilhafter Weise dadurch berücksichtigt, dass entgegen bekannter Verfahren das Mobiltelefon Verwendung findet, welches typischerweise über eine umfangreiche Sensorik und Rechenleistung verfügt. Ferner verfügt das Mobiltelefon im Gegensatz zu sogenannten Smartcards über eine verlässliche Stromversorgung, die konstanten Strom liefert und nicht lediglich auf induzierten Strom angewiesen ist.

Darüber hinaus wurde erkannt, dass gerade bei einem Entsperren eines Automobils bzw. bei einem Starten eines Automobils nicht irgendwelche Bewegungsprofile Einsatz finden, sondern vielmehr wurde erfindungsgemäß erkannt, dass jeder Fahrer ein ganz spezielles Bewegungsprofil erzeugt, wobei es insbesondere darauf ankommt, dass bei einem Startvorgang des Fahrzeugs der Fahrer tatsächlich auch in das Fahrzeug einsteigt und sodann unmittelbar vor dem Anlassen stillsitzt. Dies stellt einen ganz speziellen Bewegungsablauf dar, der beispielsweise gemäß Szenario 3 niemals erfüllt wird, da hier der Fahrer beispielsweise in einem Theater oder in einem Restaurant sitzt, was sich grundlegend von einem Einsteigen in ein Fahrzeug unterscheidet.

So unterbindet das Erstellen des Bewegungsprofils mitsamt Annäherung an das Fahrzeug einen Angriff gemäß Szenario 2, da sich ein Fahrzeuginhaber, welcher sich in einem Restaurant befindet, nicht dem Fahrzeug nähert. Darüber hinaus ist es jedoch additiv noch von Vorteil, dass das Szenario 3 dadurch berücksichtigt wird, dass in dem Referenzbewegungsprofil auch protokolliert wird, dass der Fahrer tatsächlich auch die Fahrerposition einnimmt und den Startvorgang einleitet. Dies verhindert dadurch einen Angriff gemäß Szenario 3, da der Angreifer nicht lediglich dem berechtigten Fahrzeuginhaber folgen müsste, sondern tatsächlich auch in der Fahrerposition die Startvorrichtung betätigen müsste. So sieht das Referenzbewegungsprofil stets vor, dass der Fahrer unmittelbar vor einem Startvorgang still auf der Fahrerposition sitzt. Folglich wird ein Startvorgang nur dann freigegeben, falls der Fahrer gemäß erlernter Referenzbewegungsprofile nunmehr erneut sich in ähnlicher Weise dem Automobil nähert, Platz nimmt und sich das Bewegungsprofil unmittelbar vor dem Startvorgang nicht ändert.

Bei einem Erfassen eines Referenzbewegungsprofils handelt es sich um einen vorbereitenden Verfahrensschritt, bei dem der berechtigte Fahrer testweise sich dem Automobil nähert, die Fahrerposition einnimmt und die Startvorrichtung des Automobils betätigt. Folglich kann dieser Schritt iterativ ausgeführt werden und der Fahrer kann somit dem zugrundeliegenden Verfahren ein entsprechendes Bewegungsprofil bereitstellen, welches iterativ Charakteristika lernt, die zur Freischaltung des Automobils vorliegen müssen.

Im Rahmen der Erstellung von Bewegungsprofilen ist es nicht ausschlaggebend, dass das Bewegungsprofil tatsächlich den Startvorgang des Automobils dokumentiert, sondern vielmehr wird im Rahmen des Bewegungsprofils erkannt, dass der Fahrer vor einem Betätigen der Startvorrichtung stets stillsitzt und typischerweise sogar angeschnallt ist. Folglich umfasst das Bewegungsprofil in dieser Position keine Bewegung bzw. im Wesentlichen keine Bewegung. Dieses erlernte Referenzbewegungsprofil wird im tatsächlichen Einsatz anhand eines aktuell bestimmten Bewegungsprofils berücksichtigt bzw. verglichen. Bei dem aktuellen Bewegungsprofil handelt es sich um ein Bewegungsprofil, welches der Fahrer sozusagen im Feld, also im praktischen Einsatz, zeigt, und welches anhand der Sensorik des Mobiltelefons, welches der Fahrer typischerweise bei sich trägt, erstellt wird.

Bei dem Erfassen des Referenzbewegungsprofils bzw. bei dem Bestimmen eines aktuellen Bewegungsprofils ist sicherzustellen, dass die gleichen Aktionen in dem aktuellen Bewegungsprofil vorhanden sind, wie sie auch in dem Referenzbewegungsprofil modelliert wurden. So eignet sich ein aktuelles Bewegungsprofil dann zum Vergleich mit dem erfassten Referenzbewegungsprofil, falls im Wesentlichen die gleichen Aktionen, nämlich das Nähern an das Automobil, das Einnehmen einer Fahrerposition und ein Startvorgang, aufgenommen werden. Im Rahmen des Erstellens solcher Profile werden Sensoren des Mobiltelefons ausgelesen und entsprechende Daten abgespeichert.

Hierbei können im Wesentlichen Bewegungssensoren bzw. Beschleunigungssensoren Einsatz finden, was jedoch nicht einschränkend zu verstehen ist. Vielmehr ist es auch möglich, die geographische Position sowohl des Fahrers als auch des Automobils zu berücksichtigen und dies beispielsweise anhand von GPS-Koordinaten bzw. Mobilfunkdaten abzuspeichern. Bei Mobilfunkdaten kann es sich um Daten zur geographischen Ortung handeln, welche beispielsweise darauf basieren, dass das Mobiltelefon Nachrichten mit unterschiedlichen Funkmasten bzw. Basisstationen austauscht und hierauf die Laufzeit bzw. Übermittlungsdauer der einzelnen Nachrichten ausmisst. Folglich kann auf einen Abstand zu unterschiedlichen Mobilfunkmasten geschlossen werden, woraus die aktuelle Position errechnet wird.

Sodann erfolgt ein Vergleichen des erfassten Referenzbewegungsprofils mit dem bestimmten aktuellen Bewegungsprofil, wozu mathematische Methoden bekannt sind, welche die einzelnen Daten in Verbindung setzen. Hierzu wurde erfindungsgemäß erkannt, dass sich die Bewegungsprofile typischerweise bei dem berechtigten Fahrer gleichen und insbesondere auch ein Einnehmen einer Fahrerposition typischerweise in zumindest ähnlicher Weise erfolgt. So wird nicht lediglich darauf abgestellt, dass sich der Fahrer tatsächlich auch dem Automobil nähert, sondern vielmehr kann hierdurch festgestellt werden, dass der Fahrer unmittelbar vor dem Starten des Fahrzeugs eine sitzende Position einnimmt. Folglich stellt dies auf das angeführte Szenario ab, welches darauf abstellt, dass der Fahrer beispielsweise in einem Restaurant sitzt. Wird beispielsweise erkannt, dass der Fahrer seit längerer Zeit sitzt, so kann ein Starten des Automobils vermieden werden. Folglich wird auch ein entsprechender Relais-Angriff ins Leere laufen, da typischerweise unmittelbar nach dem Einnehmen der Fahrerposition das Automobil gestartet wird. In untypischen Fällen, in denen der Fahrer seit längerem in seinem Automobil sitzt und erst dann die Startvorrichtung betätigt, kann dies derart freigegeben werden, dass der Fahrer mittels seines Mobiltelefons bestätigt, dass er tatsächlich der autorisierte Fahrer ist und das Automobil gestartet werden soll.

Mittels des Vergleichens des erfassten Referenzbewegungsprofils mit dem bestimmten aktuellen Bewegungsprofil können somit Abweichungen vom typischen und erlernten Verhalten des Fahrers identifiziert werden und der Fahrer kann nunmehr um eine entsprechende Bestätigung der Autorisierung gebeten werden. Für den Fall, dass das erfasste Referenzprofil im Wesentlichen mit dem bestimmten aktuellen Bewegungsprofil übereinstimmt, kann tatsächlich das Automobil gestartet werden.

Gemäß einem Aspekt der vorliegenden Erfindung werden das Referenzbewegungsprofil und das aktuelle Bewegungsprofil unter Verwendung von Beschleunigungssensoren erfasst. Dies hat den Vorteil, dass nicht nur geographische Koordinaten Verwendung finden, wie es beispielsweise der Stand der Technik zeigt, sondern vielmehr kann auch eine Gangart oder ein Hinsetzen des Fahrers berücksichtigt werden. Insbesondere ermöglichen die Sensoren des Mobiltelefons erweiterte Bewegungsprofile im Vergleich zu beschränkten Sensoren von Smartcards.

Gemäß einem weiteren Aspekt der vorliegenden Erfindung erfassen die Beschleunigungssensoren sowohl horizontale als auch vertikale Bewegungen als Teil des Referenzbewegungsprofils und des aktuellen Bewegungsprofils. Dies hat den Vorteil, dass nicht nur Vorwärtsbewegungen des Fahrers im Sinne des Annäherns an das Automobil detektiert werden, sondern vielmehr kann auch festgestellt werden, ob der Fahrer tatsächlich eine sitzende Position einnimmt. Folglich kann auch dokumentiert werden, dass der Fahrer tatsächlich eine Fahrerposition einnimmt und sich sodann im sitzenden Zustand die vertikale Position nicht mehr verändert. Dies ermöglicht es wiederum, erweiterte Bewegungsprofile anzufertigen, wie es herkömmliche Verfahren nicht vermögen, da diese lediglich geographische Koordinaten verwenden. Auch ist es möglich, vor einem möglichen Startvorgang abzuprüfen, dass sich der Fahrer im Wesentlichen nicht mehr bewegt.

Gemäß einem weiteren Aspekt der vorliegenden Erfindung wird ein zeitlicher Verlauf einer Distanz zwischen dem Mobiltelefon und dem Automobil als Teil des Referenzbewegungsprofils und des aktuellen Bewegungsprofils erfasst. Dies hat den Vorteil, dass Distanzen zwischen dem Fahrer und dem Automobil additiv zu vertikalen und horizontalen Bewegungen berücksichtigt werden können. Dies ermöglicht es, eine Plausibilität zu überprüfen und mittels der vertikalen Bewegung ein Gehen des Fahrers festzustellen, woraufhin sich die Distanz verringert. Wird hingegen beispielsweise erkannt, dass sich die Distanz verringert, ohne dass eine vertikale Bewegung, also ein Gehen des Fahrers, erfolgt, so ist von einem Relais-Angriff auszugehen. Auch ist eine Gangart des Fahrers dadurch zu erkennen, dass er sich bei den einzelnen Schritten leicht auf und ab bewegt und zugleich nach vorne bewegt. Hierauf verändert sich die Distanz zum Fahrzeug charakteristisch. Folglich können also diverse Sensordaten erfindungsgemäß miteinander kombiniert werden und es werden somit wiederum erweiterte Bewegungsprofile erstellt.

Gemäß einem weiteren Aspekt der vorliegenden Erfindung kann die Startvorrichtung nur betätigt werden, falls das aktuelle Bewegungsprofil zum Zeitpunkt des Betätigens keine Bewegung des Mobiltelefons anzeigt. Dies hat den Vorteil, dass explizit abgeprüft werden kann, ob der Fahrer tatsächlich eine sitzende Position einnimmt. Eine sitzende Position ist dadurch gekennzeichnet, dass sich ein Mobiltelefon, welches der Fahrer mit sich führt, weder horizontal noch vertikal bewegt. Wird hingegen festgestellt, dass sich das Mobiltelefon weiterhin bewegt, so kann wiederum darauf geschlossen werden, dass der berechtigte Benutzer mitsamt seines Mobiltelefons nicht im Fahrzeug sitzt, und folglich kann auch ein Startvorgang des Automobils unterbunden werden.

Gemäß einem weiteren Aspekt der vorliegenden Erfindung wird bei einer negativen Abfrage der Bestätigung die Startvorrichtung für einen vorbestimmten Zeitraum oder bis zu einer positiven Abfrage gesperrt. Dies hat den Vorteil, dass bei einem Ausbleiben der Bestätigung das Fahrzeug gesperrt wird und erst wieder entsperrt, sobald der Fahrer mittels seines Mobiltelefons die Autorisierung freigibt. Wird auf die Abfrage der Bestätigung nicht geantwortet oder sogar falsch geantwortet, so ist davon auszugehen, dass ein Betrugsfall vorliegt, und das Fahrzeug kann beispielsweise für 15 Minuten gesperrt werden. Ist es jedoch der Fall, dass der Fahrer lediglich ein untypisches Bewegungsprofil bereitgestellt hat, so kann er selbst die Abfrage beantworten und somit das Fahrzeug entsperren.

Gemäß einem weiteren Aspekt der vorliegenden Erfindung zeigt das Vergleichen eine Übereinstimmung an, falls sich das Referenzbewegungsprofil und das aktuelle Bewegungsprofil mindestens zu einem vorbestimmten Schwellwert gleichen. Dies hat den Vorteil, dass der Fahrer manuell einstellen kann, wie restriktiv das Vergleichen gehandhabt wird und dass beispielsweise ein Übereinstimmung von 90 % des Referenzbewegungsprofil mit dem aktuellen Bewegungsprofil ausreicht, um den Startvorgang freizugeben. Ein entsprechender Schwellwert kann auch werkseitig empirisch ermittelt werden und sodann in das zugrundeliegende System einprogrammiert werden.

Gemäß einem weiteren Aspekt der vorliegenden Erfindung wird überprüft, ob das Mobiltelefon bei dem Erfassen des Referenzbewegungsprofils, Bestimmen des aktuellen Bewegungsprofils und dem Abfragen der Bestätigung das Gleiche ist. Dies hat den Vorteil, dass neben Relais-Angriffen auch sogenannte Man-in-the-middle-Attacken abgewehrt werden können, bei denen der Angreifer eine aufgezeichnete Kommunikation mittels eines anderen Geräts vorhält. Somit handelt es sich also um einen weiteren Sicherheitsschritt, und das vorgeschlagene Verfahren kann auf ein Mobiltelefon begrenzt werden, welches dem berechtigten Benutzer zuzuordnen ist.

Gemäß einem weiteren Aspekt der vorliegenden Erfindung umfasst das Überprüfen ein Auslesen mindestens einer Kennung aus dem Mobiltelefon. Dies hat den Vorteil, dass auch personalisierte Kennungen, wie beispielsweise Passwörter oder biometrische Daten Verwendung finden können. Wird eine Bestätigung abgefragt, so kann überprüft werden, ob entsprechende Daten in dem Mobiltelefon abgespeichert sind, welche auch bei dem Erfassen des Referenzbewegungsprofils vorlagen. Folglich ist es auch möglich, in dem Mobiltelefon Signaturen zu hinterlegen, welche abprüfbar sind.

Gemäß einem weiteren Aspekt der vorliegenden Erfindung umfasst das Überprüfen ein Auslesen eines Sicherheitselements des Mobiltelefons. Dies hat den Vorteil, dass auch SIM-Karten bzw. integrierte SIM-Karten verwendet werden können, welche hardwaretechnisch und/oder softwaretechnisch speziell abgesichert sind. Beispielsweise kann eine sogenannte embedded Universal Integrated Circuit Card eUICC Verwendung finden, und bekannte Identifikationsnummern können bezüglich ihres Vorhandenseins sowohl beim Erstellen des Referenzprofils als auch beim Bestätigen der Abfrage Verwendung finden.

Gemäß einem weiteren Aspekt der vorliegenden Erfindung wird eine Mobilfunkverbindung zwischen dem Automobil und dem Mobiltelefon zum Abfragen der Bestätigung eingerichtet. Dies hat den Vorteil, dass bei einem auffälligen Bewegungsprofil der berechtigte Benutzer kontaktiert werden kann und ihm beispielsweise mittel einer Applikation oder einer Textnachricht mitgeteilt werden kann, dass ein nicht-identifizierbares Bewegungsprofil vorliegt. Sodann hat der berechtigte Benutzer die Möglichkeit, die Bestätigung zu erteilen oder aber auch zu verweigern.

Gemäß einem weiteren Aspekt der vorliegenden Erfindung werden das Referenzbewegungsprofil und das aktuelle Bewegungsprofil unter Verwendung von geographischen Koordinaten erfasst. Dies hat den Vorteil, dass in den Beschleunigungssensoren diverse weitere Sensoren die Profile anreichern können und somit umfassende Bewegungsprofile Verwendung finden können. So kann ein Relais-Angriff von vornherein detektiert werden, falls sich der berechtigte Benutzer mitsamt seines Mobiltelefons außerhalb einer Reichweite des Automobils befindet. Sitzt beispielsweise der Fahrer in einem Restaurant und hat sein Fahrzeug auf einem Parkplatz abgestellt, so kann allein anhand der geographischen Koordinaten berechnet werden, dass ein Entsperren nicht gewollt ist, auch wenn durch einen Eingriff unberechtigter Dritte tatsächlich eine Funkstrecke zwischen dem Automobil und dem Mobiltelefon hergestellt wird. Ein solches Überbrücken wird sodann verhindert, und die geographischen Koordinaten geben klaren Aufschluss über den tatsächlichen Aufenthaltsort des Automobils und des Mobiltelefons.

Gemäß einem weiteren Aspekt der vorliegenden Erfindung werden das Referenzbewegungsprofil und das aktuelle Bewegungsprofil unter Verwendung von jeweils mindestens einer GPS-Koordinate und/oder von Nachrichtenübermittlungsdauern an mindestens einem Mobilfunkmasten erfasst. Dies hat den Vorteil, dass die Position des Mobiltelefons zu jeder Zeit feststellbar ist, da typischerweise entweder eine GPS-Koordinate zur Verfügung steht oder aber auch ein relativer Abstand zu Mobilfunkmasten. Typischerweise besteht hierbei sogar eine Ortungsmöglichkeit innerhalb von Gebäuden, auch wenn keine GPS-Daten abrufbar sind. So ist es u. a. in der Mobilfunkbranche bekannt, an benachbarte Mobilfunkmasten Anfragen zu senden und hierbei Latenzzeiten zu berechnen. So kann anhand der Verzögerung einer Antwort erkannt werden, wie weit sich das Mobiltelefon von unterschiedlichen Mobilfunkmasten aufhält und somit auch die geographische Position berechnet werden.

Die Aufgabe wird auch gelöst durch eine Systemanordnung zum Verhindern eines Relaisangriffs zwischen einem Mobiltelefon und einer Startvorrichtung eines Automobils, aufweisend das Mobiltelefon eingerichtet zum Erfassen eines Referenzbewegungsprofils unter Verwendung des Mobiltelefons, bei dem sich ein berechtigter Fahrer dem Automobil nähert, eine Fahrerposition einnimmt und die Startvorrichtung betätigt, wobei das gleiche Mobiltelefon ferner eingerichtet ist zum Bestimmen eines aktuellen Bewegungsprofils, welches zum Vergleich mit dem erfassten Referenzbewegungsprofil geeignet ist und eine Autorisierungseinheit eingerichtet zum Vergleichen des erfassten Referenzbewegungsprofils mit dem bestimmten aktuellen Bewegungsprofil und das Mobiltelefon eingerichtet ist zum Abfragen einer Bestätigung, falls die Startvorrichtung betätigt wird und das Vergleichen keine Übereinstimmung zwischen dem erfassten Referenzbewegungsprofil und dem bestimmten aktuellen Bewegungsprofil ergibt.

Die vorgeschlagene Systemanordnung kann weitere strukturelle Merkmale umfassen, welche beispielsweise eine Mobilfunkverbindung zwischen dem Automobil und dem Mobiltelefon herstellen. Die Autorisierungseinheit kann in dem Mobiltelefon oder aber auch in dem Automobil verbaut werden.

Die Aufgabe wird auch gelöst durch ein Computerprogrammprodukt mit Steuerbefehlen, welche das Verfahren ausführen bzw. die Systemanordnung betreiben.

Erfindungsgemäß ist es besonders vorteilhaft, dass das vorgeschlagene Verfahren Verfahrensschritte aufweist, welche ebenso als strukturelle Merkmale der Systemanordnung funktional nachgebildet werden können. Ferner umfasst die Systemanordnung strukturelle Merkmale, welche bezüglich ihrer Funktion auch als Verfahrensschritte implementiert werden können. Das Computerprogrammprodukt dient sowohl dem Ausführen des Verfahrens als auch dem Betreiben der Systemanordnung. Insgesamt ist das Verfahren eingerichtet, die Systemanordnung zu betreiben und die Systemanordnung ist wiederum geeignet, das Verfahren auszuführen.

Weitere vorteilhafte Ausgestaltungen werden anhand der beigefügten Figuren näher erläutert. Es zeigen:
- Fig. 1:: ein schematisches Schaubild, welches drei Anwendungsszenarien der vorliegenden Erfindung verdeutlicht; und
- Fig. 2:: ein schematisches Ablaufdiagramm eines Verfahrens zum Verhindern eines Relais-Angriffs gemäß einem Aspekt der vorliegenden Erfindung.

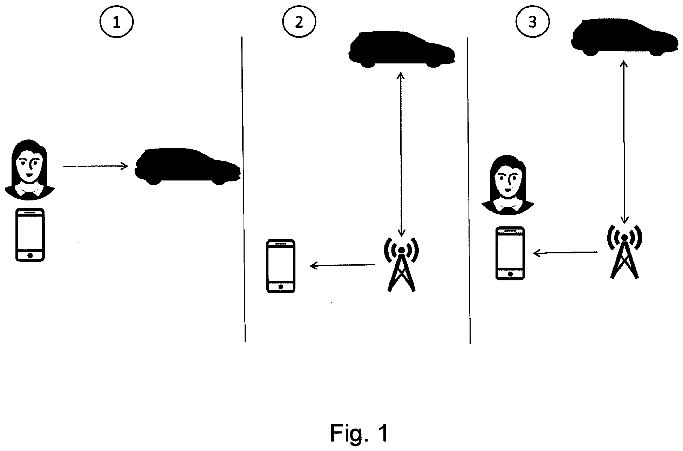

Fig. 1 stellt auf die bereits angeführten Szenarien ab, welche der vorliegenden Erfindung zugrundeliegen. Gemäß einem ersten Szenario auf der linken Seite verfügt ein berechtigter Benutzer über ein Mobiltelefon, welches ebenso berechtigterweise eingerichtet ist ein Automobil zu entsperren und den Motor zu starten. Somit erfasst das Mobiltelefon ein Gehen bzw. ein Sitzen des Benutzers und verwendet hierbei u. a. Beschleunigungssensoren. Dieses Anwendungsszenario ist unkritisch, da der Benutzer hierbei autorisiert ist und keinerlei Angriffe stattfinden. Insbesondere finden keine Man-in-the-middle-Angriffe statt bzw. Relais-Angriffe.

Im Gegensatz hierzu ist in der Mitte ein zweites Szenario gezeigt, wobei ein sogenannter Range Extender, also eine Vorrichtung, welche die Funkverbindung geographisch erweitert, vorgesehen ist. Diese Vorrichtung wird zwischen das Mobiltelefon und die Kommunikationsschnittstelle des Automobils geschaltet und spielt dem Automobil vor, dass sich das Mobiltelefon in der Nähe befinden soll. Jedoch soll gemäß diesem Angriff ermöglicht werden, dass das Mobiltelefon tatsächlich ein Aufsperren bzw. Starten des Automobils zulässt, obwohl sich das Mobiltelefon nur vermeintlich in der Nähe befindet, tatsächlich aber entfernt angeordnet ist.

So kann es vorliegend der Fall sein, dass das Mobiltelefon in einer Garderobe mitsamt Bekleidungsstücken abgegeben wurde und der autorisierte Benutzer tatsächlich nicht anwesend ist. In diesem Fall wird auch keine Bewegung des Benutzer detektiert, da er sich beispielsweise in einem Theater befindet. Der Angreifer kann vermeintlich das Mobiltelefon an das Automobil heranführen, welches dem Automobil vorspielt, dass sich tatsächlich das Mobiltelefon annähern würde. Vorliegend wird ein solcher Angriff jedoch erfindungsgemäß verhindert, da das System ein ganz bestimmtes Bewegungsprofil gelernt hat, welches jedem Individuum zuzuordnen ist. Ferner werden die Bewegungsprofile anhand unterschiedlicher Sensoren des Mobiltelefons erfasst und dies ist für den Angreifer nicht ersichtlich. So kann zwar die Funkverbindung zwischen dem Automobil und dem Mobiltelefon künstlich hergestellt bzw. erweitert werden, da jedoch das Bewegungsprofil anhand des Mobiltelefons erfasst wird, wird ersichtlich, das sich der Fahrer beispielsweise nicht bewegt oder nicht charakteristisch bewegt.

Sitzt der Fahrer, welcher tatsächlich berechtigt ist, in einem Restaurant und näher ein Angreifer den sogenannten Range Extender an das Fahrzeug an, so wird immer noch erkannt, dass das erwartete Bewegungsprofil nicht vorliegt. Hierzu müsste der Angreifer das zwischengeschaltete Gerät nutzen, um ein entsprechendes Bewegungsprofil zu erstellen und hiermit sogar sich derart charakteristisch verhalten, dass der autorisierte Fahrer vorgespielt wird. Dies ist typischerweise nicht möglich, und insbesondere kennt der Angreifer nicht das zugrundeliegende Verfahren und weiß somit auch nicht, welche Daten ein solches Bewegungsprofil umfasst. Folglich wird dieser Angriff also wirksam unterbunden.

Auf der rechten Seite in der vorliegenden Fig. 1 ist ein weiteres sicherheitskritisches Szenario 3 gezeigt, in dem sich der autorisierte Benutzer nicht in sitzender Position befindet, sondern vielmehr bewegt sich der autorisierte Fahrer beispielsweise an dem Auto vorbei. Hierbei kann aber wiederum das Referenzbewegungsprofil abgeprüft werden, welches aufgenommen hat, dass der Fahrer eine Fahrerposition eingenommen hat. Da jedoch der berechtigte Fahrer an dem Fahrzeug vorbeigeht, wird eine solche sitzende Position nicht erkannt und der Startvorgang wird verhindert. Somit ist es von Vorteil, dass das Referenzbewegungsprofil nicht den eigentlichen Startvorgang des Fahrzeugs dokumentiert, sondern vielmehr wird anhand des Referenzbewegungsprofils dokumentiert, dass, bevor der Fahrer die Startvorrichtung betätigt, er sitzt bzw. sich nicht mehr bewegt. Somit wird stets gefordert, dass der Fahrer sich dem Automobil nähert, eine Fahrerposition einnimmt, und darüber hinaus wird der Sitzvorgang dokumentiert, da der Fahrer bei dem Erstellen des Referenzbewegungsprofils die Startvorrichtung betätigt. Dies wird er beim Erstellen des Referenzbewegungsprofils lediglich im Sitzen veranlassen. Somit wird also auch diesem dritten Angriffsszenario begegnet.

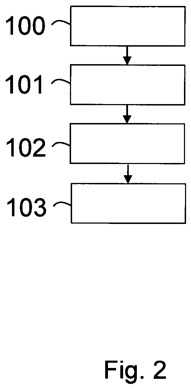

Fig. 2 zeigt ein Verfahren zum Verhindern eines Relais-Angriffs zwischen einem Mobiltelefon und einer Startvorrichtung eines Automobils, aufweisend ein Erfassen 100 eines Referenzbewegungsprofils unter Verwendung des Mobiltelefons, bei dem sich ein berechtigter Fahrer dem Automobil nähert, eine Fahrerposition einnimmt und eine Startvorrichtung betätigt, ein Bestimmen 101 eines aktuellen Bewegungsprofils, welches zum Vergleich mit dem erfassten 100 Referenzbewegungsprofil geeignet ist, ein Vergleichen 102 des erfassten 100 Referenzbewegungsprofils mit dem bestimmten 101 aktuellen Bewegungsprofil und ein Abfragen 103 einer Bestätigung mittels des Mobiltelefons, falls die Startvorrichtung betätigt wird und das Vergleichen 102 keine Übereinstimmung zwischen dem erfassten 100 Referenzbewegungsprofil und dem bestimmten 101 aktuellen Bewegungsprofil ergibt.

Der Fachmann erkennt hierbei, dass einzelne Verfahrensschritte iterativ ausgeführt werden und teilweise Unterschritte aufweisen können. Beispielsweise kann das Erfassen 100 eines Referenzbewegungsprofils iterativ erfolgen und somit das Referenzbewegungsprofil stets verfeinert werden.

## Patentansprüche

1. Verfahren zum Verhindern eines Relaisangriffs zwischen einem Mobiltelefon und einer Startvorrichtung eines Automobils, aufweisend:
- Erfassen (100) eines Referenzbewegungsprofils unter Verwendung des Mobiltelefons bei dem sich ein berechtigter Fahrer dem Automobil nähert, eine Fahrerposition einnimmt und die Startvorrichtung betätigt;
- Bestimmen (101) eines aktuellen Bewegungsprofils, welches zum Vergleich mit dem erfassten (100) Referenzbewegungsprofil geeignet ist;
- Vergleichen (102) des erfassten (100) Referenzbewegungsprofils mit dem bestimmten (101) aktuellen Bewegungsprofil, **gekennzeichnet durch**
- Abfragen (103) einer Bestätigung mittels des Mobiltelefons, falls die Startvorrichtung betätigt wird und das Vergleichen (102) keine Übereinstimmung zwischen dem erfassten (100) Referenzbewegungsprofil und dem bestimmten (101) aktuellen Bewegungsprofil ergibt,
- wobei bei einer negativen Abfrage (103) der Bestätigung die Startvorrichtung für einen vorbestimmbaren Zeitraum oder bis zu einer positiven Abfrage (103) gesperrt wird.

2. Verfahren nach Anspruch 1, **dadurch gekennzeichnet, dass** das Referenzbewegungsprofil und das aktuelle Bewegungsprofil unter Verwendung von Beschleunigungssensoren erfasst (100,101) werden.

3. Verfahren nach Anspruch 2, **dadurch gekennzeichnet, dass** die Beschleunigungssensoren sowohl horizontale als auch vertikale Bewegungen als Teil des Referenzbewegungsprofils und des aktuellen Bewegungsprofils erfassen.

4. Verfahren nach einem der vorhergehenden Ansprüche, **dadurch gekennzeichnet, dass** ein zeitlicher Verlauf einer Distanz zwischen dem Mobiltelefon und dem Automobil als Teil des Referenzbewegungsprofils und des aktuellen Bewegungsprofils erfasst (100, 101) wird.

5. Verfahren nach einem der vorhergehenden Ansprüche, **dadurch gekennzeichnet, dass** die Startvorrichtung nur betätigt werden kann, falls das aktuelle Bewegungsprofil zum Zeitpunkt des Betätigens keine Bewegung des Mobiltelefons anzeigt.

6. Verfahren nach einem der vorhergehenden Ansprüche, **dadurch gekennzeichnet, dass** das Vergleichen (102) eine Übereinstimmung anzeigt, falls sich das Referenzbewegungsprofil und das aktuelle Bewegungsprofil mindestens zu einem vorbestimmten Schwellwert gleichen.

7. Verfahren nach einem der vorhergehenden Ansprüche, **dadurch gekennzeichnet, dass** überprüft wird, ob das Mobiltelefon bei dem Erfassen (100) des Referenzbewegungsprofils, Bestimmen (101) des aktuellen Bewegungsprofils und dem Abfragen (103) der Bestätigung das gleiche ist.

8. Verfahren nach Anspruch 7, **dadurch gekennzeichnet, dass** das Überprüfen ein Auslesen mindestens einer Kennung aus dem Mobiltelefon umfasst.

9. Verfahren nach einem der Ansprüche 7 oder 8, **dadurch gekennzeichnet, dass** das Überprüfen ein Auslesen eines Sicherheitselements des Mobiltelefons umfasst.

10. Verfahren nach einem der vorhergehenden Ansprüche, **dadurch gekennzeichnet, dass** eine Mobilfunkverbindung zwischen dem Automobil und dem Mobiltelefon zum Abfragen (103) der Bestätigung eingerichtet wird.

11. Verfahren nach einem der vorhergehenden Ansprüche, **dadurch gekennzeichnet, dass** das Referenzbewegungsprofil und das aktuelle Bewegungsprofil unter Verwendung von geographischen Koordinaten erfasst (100, 101) werden.

12. Verfahren nach einem der vorhergehenden Ansprüche, **dadurch gekennzeichnet, dass** das Referenzbewegungsprofil und das aktuelle Bewegungsprofil unter Verwendung von jeweils mindestens einer GPS-Koordinate und/ oder von Nachrichtenübermittlungsdauern an mindestens einen Mobilfunkmasten erfasst (100, 101) werden.

13. Systemanordnung zum Verhindern eines Relaisangriffs zwischen einem Mobiltelefon und einer Startvorrichtung eines Automobils, aufweisend:
- das Mobiltelefon eingerichtet zum Erfassen (100) eines Referenzbewegungsprofils unter Verwendung des Mobiltelefons bei dem sich ein berechtigter Fahrer dem Automobil nähert, eine Fahrerposition einnimmt und die Startvorrichtung betätigt, wobei das gleiche Mobiltelefon ferner eingerichtet ist zum Bestimmen (101) eines aktuellen Bewegungsprofils, welches zum Vergleich mit dem erfassten (100) Referenzbewegungsprofil geeignet ist; und
- eine Autorisierungseinheit eingerichtet zum Vergleichen (102) des erfassten (100) Referenzbewegungsprofils mit dem bestimmten (101) aktuellen Bewegungsprofil; und das Mobiltelefon eingerichtet ist zum Abfragen (103) einer Bestätigung, falls die Startvorrichtung betätigt wird und das Vergleichen (102) keine Übereinstimmung zwischen dem erfassten (100) Referenzbewegungsprofil und dem bestimmten (101) aktuellen Bewegungsprofil ergibt
- wobei bei einer negativen Abfrage der Bestätigung die Startvorrichtung für einen vorbestimmbaren Zeitraum oder bis zu einer positiven Abfrage gesperrt wird.

## Claims

1. A method for preventing a relay attack between a mobile phone and a starting device of an automobile, comprising:
- capturing (100) a reference movement profile using the mobile phone, in which an authorized driver approaches the automobile, takes up a driver position and actuates a starting device;
- determining (101) a current movement profile which is suitable for comparison with the captured (100) reference movement profile;
- comparing (102) the captured (100) reference movement profile with the determined (101) current movement profile; **characterized by**
- requesting (103) a confirmation by means of the mobile phone if the starting device is actuated and the comparing (102) does not result in a match between the captured (100) reference movement profile and the determined (101) current movement profile,
- wherein in the event of a negative request (103) of the confirmation the starting device is locked for a predeterminable period of time or until a positive request (103).

2. The method according to claim 1, **characterized in that** the reference movement profile and the current movement profile are captured (100, 101) using acceleration sensors.

3. The method according to claim 2, **characterized in that** the acceleration sensors capture both horizontal and vertical movements as part of the reference movement profile and of the current movement profile.

4. The method according to any of the preceding claims, **characterized in that** a time course of a distance between the mobile phone and the automobile is captured (100, 101) as part of the reference movement profile and of the current movement profile.

5. The method according to any of the preceding claims, **characterized in that** the starting device can only be actuated if the current movement profile does not indicate any movement of the mobile phone at the time of actuation.

6. The method according to any of the preceding claims, **characterized in that** the comparing (102) indicates a match if the reference movement profile and the current movement profile are equal at least to a predetermined threshold value.

7. The method according to any of the preceding claims, **characterized in that** it is checked whether the mobile phone is the same when capturing (100) the reference movement profile, determining (101) the current movement profile and requesting (103) the confirmation.

8. The method according to claim 7, **characterized in that** the checking comprises a readout of at least one identifier from the mobile phone

9. The method according to any of claims 7 or 8, **characterized in that** the checking comprises a readout of a security element of the mobile phone.

10. The method according to any of the preceding claims, **characterized in that** a mobile radio link is arranged between the automobile and the mobile phone for requesting (103) the confirmation.

11. The method according to any of the preceding claims, **characterized in that** the reference movement profile and the current movement profile are captured (100, 101) using geographical coordinates.

12. The method according to any of the preceding claims, **characterized in that** the reference movement profile and the current movement profile are captured (100, 101) using respectively at least one GPS coordinate and/or message transmission durations at at least one mobile radio mast.

13. A system arrangement for preventing a relay attack between a mobile phone and a starting device of an automobile, comprising:
- the mobile phone arranged for capturing (100) a reference movement profile using the mobile phone, in which an authorized driver approaches the automobile, takes up a driver position and actuates the starting device, wherein the same mobile phone is further arranged for
determining (101) a current movement profile which is suitable for comparison with the captured (100) reference movement profile; and
- an authorization unit arranged for comparing (102) the captured (100) reference movement profile with the determined (101) current movement profile; and the mobile phone being arranged for
requesting (103) a confirmation if the starting device is actuated and the comparing (102) does not result in a match between the captured (100) reference movement profile and the determined (101) current movement profile,
- wherein in the event of a negative request of the confirmation the starting device is locked for a predeterminable period of time or until a positive request.

## Revendications

1. Procédé destiné à empêcher une attaque de relais entre un téléphone mobile et un dispositif de démarrage d'une automobile, comportant :
- saisie (100) d'un profil de déplacement de référence en utilisant le téléphone mobile, dans lequel un conducteur autorisé s'approche de l'automobile, adopte une position de conducteur et actionne le dispositif de démarrage ;
- détermination (101) d'un profil actuel de déplacement adapté à la comparaison avec le profil de déplacement de référence saisi (100) ;
- comparaison (102) du profil de déplacement de référence saisi (100) avec le profil actuel de déplacement déterminé (101), **caractérisé par**
- demande (103) d'une confirmation au moyen du téléphone mobile dans le cas où le dispositif de démarrage est actionné et que la comparaison (102) n'indique pas de concordance entre le profil de déplacement de référence saisi (100) et le profil actuel de déplacement déterminé (101),
- cependant que, dans le cas d'une demande (103) négative de la confirmation, le dispositif de démarrage est bloqué pour un laps de temps prédéterminable ou jusqu'à une demande (103) positive.

2. Procédé selon la revendication 1, **caractérisé en ce que** le profil de déplacement de référence et le profil actuel de déplacement sont saisis (100, 101) en utilisant des capteurs d'accélération.

3. Procédé selon la revendication 2, **caractérisé en ce que** les capteurs d'accélération saisissent tant des déplacements horizontaux que verticaux comme partie du profil de déplacement de référence et du profil actuel de déplacement.

4. Procédé selon une des revendications précédentes, **caractérisé en ce qu'**une courbe temporelle d'une distance entre le téléphone mobile et l'automobile est saisie (100, 101) comme partie du profil de déplacement de référence et du profil actuel de déplacement.

5. Procédé selon une des revendications précédentes, **caractérisé en ce que** le dispositif de démarrage ne peut être actionné que dans le cas où le profil actuel de déplacement ne montre au moment de l'actionnement aucun déplacement du téléphone mobile.

6. Procédé selon une des revendications précédentes, **caractérisé en ce que** la comparaison (102) montre une concordance dans le cas où le profil de déplacement de référence et le profil actuel de déplacement sont identiques à une valeur seuil prédéterminée près.

7. Procédé selon une des revendications précédentes, **caractérisé en ce qu'**il est vérifié si le téléphone mobile est le même lors de la saisie (100) du profil de déplacement de référence, lors de la détermination (101) du profil actuel de déplacement et lors de la demande (103) de la confirmation.

8. Procédé selon la revendication 7, **caractérisé en ce que** la vérification comprend une lecture d'au moins un identifiant depuis le téléphone mobile.

9. Procédé selon une des revendications 7 ou 8, **caractérisé en ce que** la vérification comprend une lecture d'un élément de sécurité du téléphone mobile.

10. Procédé selon une des revendications précédentes, **caractérisé en ce qu'**une liaison de radiocommunication mobile est établie entre l'automobile et le téléphone mobile pour la demande (103) de la confirmation.

11. Procédé selon une des revendications précédentes, **caractérisé en ce que** le profil de déplacement de référence et le profil actuel de déplacement sont saisis (100, 101) en utilisant des coordonnées géographiques.

12. Procédé selon une des revendications précédentes, **caractérisé en ce que** le profil de déplacement de référence et le profil actuel de déplacement sont saisis (100, 101) en utilisant respectivement au moins une coordonnée GPS et/ou des durées de transmission de messages à au moins un pylône de radiocommunication mobile.

13. Agencement de système destiné à empêcher une attaque de relais entre un téléphone mobile et un dispositif de démarrage d'une automobile, comportant :
- le téléphone mobile équipé pour saisir (100) un profil de déplacement de référence en utilisant le téléphone mobile, dans lequel un conducteur autorisé s'approche de l'automobile, adopte une position de conducteur et actionne le dispositif de démarrage, cependant que ledit téléphone mobile est en outre équipé pour
déterminer (101) un profil actuel de déplacement adapté à la comparaison avec le profil de déplacement de référence saisi (100) ; et
- une unité d'autorisation est équipée pour comparer (102) le profil de déplacement de référence saisi (100) avec le profil actuel de déplacement déterminé (101), et le téléphone mobile est équipé pour
demander (103) une confirmation dans le cas où le dispositif de démarrage est actionné et la comparaison (102) n'indique pas de concordance entre le profil de déplacement de référence saisi (100) et le profil actuel de déplacement déterminé (101),
- cependant que, dans le cas d'une demande négative de la confirmation, le dispositif de démarrage est bloqué pour un laps de temps prédéterminable ou jusqu'à une demande positive.
